# EUROPÄISCHE PATENTSCHRIFT

(11) **EP 2 900 553 B1**
(45) Veröffentlichungstag und Bekanntmachung des Hinweises auf die Patenterteilung: **12.07.2017**
(21) Anmeldenummer: 13766379.5
(22) Anmeldetag: 26.09.2013
(51) Int. Cl.: B64D 11/06, B64D 11/00

(54) **BEFESTIGUNGSSYSTEM UND HALTEVORRICHTUNG MIT EINEM PORTABLEN HALTERUNGSADAPTER FÜR PASSAGIERGERÄTE IN EINEM FLUGZEUG**
SECURING SYSTEM AND RETAINING DEVICE WITH A PORTABLE MOUNTING ADAPTER FOR PASSENGER APPLIANCES IN AN AIRCRAFT
SYSTÈME DE FIXATION ET DISPOSITIF DE MAINTIEN AVEC UN ADAPTATEUR DE FIXATION PORTABLE POUR APPAREILS DE PASSAGER DANS UN AVION

(30) Priorität: 28.09.2012 DE 102012217802
(43) Veröffentlichungstag der Anmeldung: 05.08.2015
(73) Patentinhaber: Lufthansa Technik AG, 22335 Hamburg (DE)
(72) Erfinder: MUIRHEAD, Andrew, 22848 Norderstedt (DE)
(74) Vertreter: Müller Verweyen
(86) Internationale Anmeldenummer: PCT/EP2013/070110
(87) Internationale Veröffentlichungsnummer: WO 2014/049072

(56) Entgegenhaltungen:
- EP-A1- 1 973 299
- WO-A1-2011/092348
- US-A1- 2006 219 857
- US-A1- 2008 023 600
- US-A1- 2009 090 821
- US-A1- 2011 278 885

## Beschreibung

Die Erfindung betrifft ein Befestigungssystem und eine Haltevorrichtung für Passagiergeräte in einem Flugzeug.

Passagiergeräte können Mobiltelefone, tragbare Computer, Unterhaltungsgeräte und/oder jegliche Mischform dieser Gerätearten, wie beispielsweise Smartphones oder Tablet-PCs, sein. Die Passagiergeräte werden von den Passagieren eines Fluges mit in das Flugzeug gebracht und können dort von den Passagieren genutzt werden. Eine Ausnahme für die Benutzung bilden hierbei aus luftfahrtrechtlichen Gründen die kritischen Flugphasen, wie z.B. Rollen, Start oder Landung, während der die Nutzung von Passagiergeräten nur eingeschränkt erlaubt ist.

Die Passagiergeräte werden von den Passagieren während des Fluges zur Unterhaltung oder auch zur Arbeit genutzt. In der Kabine eines Flugzeugs ist es seitens der Airline schwerlich möglich, ein entsprechendes Gerät für jeden Passagier, welches er anstelle seines Passagiergerätes nutzen kann, vorzusehen, da die Passagiergeräte beispielsweise persönliche Daten und Programme enthalten, wodurch die Passagiergeräte besser an die individuellen Bedürfnisse des jeweiligen Passagiers angepasst sind. Weiterhin sind die Produktzyklen für mobile elektronische Geräte vergleichsweise kurz, so dass die Ausstattung einer Kabine eines Flugzeugs mit entsprechenden Endgeräten für den Passagier aufgrund längerer Entwicklungszyklen in der Luftfahrt zwangsläufig nur zeitverzögert erfolgen kann.

Daher werden aufgrund der steigenden Verbreitung und Funktionalität von Passagiergeräten, wie Smartphones oder Tablet-PCs, diese zunehmend während des Fluges genutzt.

Nachteilig für die effektive Nutzung von Passagiergeräten durch einen Passagier in einer Kabine eines Flugzeugs ist der beengte Raum, der für den Passagier zur Verfügung steht. Aufgrund von wirtschaftlichen Gesichtspunkten ist die Bestuhlung in den Kabinen relativ eng, so dass für die Nutzung durch den Passagier nur eine begrenzte Ablagefläche zur Verfügung steht. Typischerweise steht dem Passagier ein Klapptisch zur Verfügung, der jedoch insbesondere beim Servieren von Mahlzeiten durch das Servicepersonal nur begrenzt für die parallele Nutzung des Passagiergerätes geeignet ist.

Einem Befestigungssystem für Passagiergeräte steht die ständig wachsende Vielzahl unterschiedlicher Gerätemodelle und auch Gerätetypen entgegen, so dass bisher Befestigungssysteme nur auf einzelne Passagiergerätemodelle zugeschnitten werden können.

Befestigungssysteme für Passagiergeräte sind insbesondere im Bereich vor dem Kopf des Passagiers von den Passagieren erwünscht, um ein gutes Sichtfeld auf das Passagiergerät zu ermöglichen. Dies steht jedoch der Passagiersicherheit im Crashfall entgegen, da in einem solchen Fall der Kopf des Passagiers in Kontakt bzw. Kollision mit Gegenständen vor ihm, dies betrifft insbesondere sein direktes Sichtfeld, treten kann. Dies ist bei der üblichen Reihenbestuhlung in Flugzeugen mit begrenzten Abständen zu der Rückenlehne des vorderen Flugzeugsitzes problematisch, da ein an dieser Stelle angeordnetes Befestigungssystem im Crashfall den Kopf, die Arme und/oder den Torso des Passagiers durch einen Aufprall verletzen könnte.

Aus der US 2011/278885 A1 ist ein Adapter zur Befestigung eines tragbaren elektronischen Geräts bekannt. Es ist eine Aufnahme vorgesehen, über die das elektronische Gerät gehalten und auch eine elektronische Verbindung hergestellt werden kann. Der Adapter ist dann wiederum dazu eingerichtet, an einem Passagiersitz befestigt zu werden und die elektrischen Signale weiterzuleiten.

Weiter offenbart die US 2008/0023600 A1 ein Montagesystem zur Aufnahme eines Geräts mit einer Bedienoberfläche. Das Montagesystem ist dazu eingerichtet, das Montagesystem so gegenüber einem Passagier auszurichten, dass dieser die Bedienoberfläche bedienen kann. Ferner ist die Schnittstelle zwischen dem Montagesystem und dem Gerät so eingerichtet, dass das Gerät einfach gewechselt werden kann. Ein ähnliches System wird auch in der US 2006/0219857 A1 offenbart, wobei hier ein Monitor über eine Halterung mit einem Schaft verbunden ist, der gegenüber einer Befestigung linear verschiebbar gelagert ist. Bei einer Verstellbewegung aus einem verstauten Zustand in den Nutzzustand wirkt zur Unterstützung eine konstante Kraft.

Die WO 2011/092348 A1 offenbart eine Vorrichtung zum Befestigen eines Tablet-Computers an der Rückseite eines Fahrzeugsitzes. Dabei ist eine Befestigungseinrichtung vorgesehen, die dazu dient, die Vorrichtung an einem Fahrzeugsitzteil zu befestigen. Ein Trägerelement ist mit der Befestigungseinrichtung beweglich verbunden, wobei ein Halter zur Aufnahme des Tablet-Computers wiederum mit dem Trägerelement beweglich verbunden ist.

Schließlich ist aus der EP 1 973 299 A1 eine drahtlos ansteuerbare elektrische oder elektronische Funktionseinheit für ein Flugzeug bekannt. Wobei der Einbauort der Funktionseinheit berührungslos identifiziert werden kann.

Die Aufgabe der Erfindung ist es, ein Befestigungssystem und eine Haltevorrichtung für ein Passagiergerät anzugeben, welches die oben genannten Nachteile überkommt.

Die Aufgabe der Erfindung wird ausgehend vom Oberbegriff des Anspruchs 6 mit dessen kennzeichnenden Merkmalen gelöst. Es wird ein Befestigungssystem vorgeschlagen, welches erfindungsgemäß eine an oder in einem Flugzeugsitz anzubringende Haltevorrichtung aufweist, wobei die Haltevorrichtung eine Verbindungsvorrichtung umfasst. Das Befestigungssystem weist einen portablen Halterungsadapter auf, wobei der Halterungsadapter eine Verbindungseinrichtung aufweist, wobei die Verbindungsvorrichtung zwischen einer Parkstellung und einer Nutzstellung verschiebbar ist. Die Verbindungsvorrichtung und die Verbindungseinrichtung sind lösbar miteinander mechanisch tragend verbindbar, und der Halterungsadapter ist dazu eingerichtet, mit dem Passagiergerät tragend verbunden zu werden.

Die Haltevorrichtung kann an dem Flugzeugsitz montiert oder in diesem integriert sein, sie stellt die Verbindung zwischen dem Flugzeugsitz und der Verbindungsvorrichtung her. Die Verbindungsvorrichtung kann eine mechanische Kopplung mit einer Verbindungseinrichtung eines Halterungsadapters aufweisen. Der Halterungsadapter kann ein Adapter sein, der an ein bestimmtes Passagiergerät angepasst ist, wobei jedoch die Verbindungseinrichtung unabhängig von dem jeweiligen Passagiergerät ausgeführt werden kann. Die lösbare Verbindung zwischen der Verbindungseinrichtung des Halterungsadapters und der Verbindungsvorrichtung der Haltevorrichtung ermöglicht eine vorteilhafte Befestigung und Platzierung des Passagiergeräts an oder in einem Flugzeugsitz im Sichtfeld des Passagiers, so dass das Passagiergerät zur Nutzung freitragend in dessen Reichweite angeordnet werden kann. Dies ermöglicht die vorteilhafte Nutzung durch den Passagier, ohne das Passagiergerät in der Hand halten zu müssen oder es auf seinen Beinen oder auf einem Klapptisch abzulegen, so dass auch in einem beengten Raum eine effektive Nutzung ermöglicht wird.

Weiterhin ist durch die Verwendung eines Halterungsadapters, der sehr preiswert ausgeführt werden kann, eine individuelle Anpassung an verschiedenste Typen von Passagiergeräten möglich. Der Halterungsadapter kann hierbei vorteilhafterweise für weitere Flüge wiederverwendet werden, so dass der Halterungsadapter prinzipiell die gleiche Nutzungsdauer aufweisen kann, wie das Passagiergerät selbst. Zudem kann der Halterungsadapter von dem Passagier zusammen mit dem Passagiergerät auf der Reise mitgeführt werden.

Das Befestigungssystem eignet sich vorteilhaft für bildschirmgesteuerte Passagiergeräte, also insbesondere Geräte, die über einen berührungssensitiven Bildschirm verfügen. Des Weiteren ermöglicht das Befestigungssystem in einer typischen Kabinenbestuhlung die effektive und parallele Nutzung des Passagiergeräts und die Einnahme von Mahlzeiten und Getränken im Flugzeug. Das Passagiergerät kann hierbei jederzeit für den Passagier abnehmbar bleiben, so dass auch eine handgeführte Nutzung des Passagiergeräts möglich bleibt. Vorteilhafterweise ist der Halterungsadapter entsprechend ausgebildet, so dass er einer handgeführten Nutzung nicht entgegen steht. Die tragende Verbindung des Passagiergeräts durch den Halterungsadapter erfolgt vorzugsweise direkt, es sind jedoch auch indirekte tragende Verbindungen über ein Vermittlungsteil, bspw. eine Schutzhülle für das Passagiergerät, möglich.

In kritischen Flugphasen, wie Rollen, Start, Landeanflug und Landung, in denen der Betrieb von Passagiergeräten aus luftfahrtrechtlichen Gründen nicht gestattet ist, kann die Verbindungsvorrichtung aus der Nutzstellung in die Parkstellung gebracht werden, wobei die Parkstellung keine Befestigung eines Halterungsadapters erlaubt, so dass in der Parkstellung kein Passagiergerät mit dem Befestigungssystem befestigbar ist. Die Parkstellung ist gezielt für einen Crashfall ausgelegt, so dass der Passagier in einem Crashfall durch das Befestigungssystem nicht gefährdet wird. Dies ist möglich, da in der Parkstellung die eigentlichen Funktionalitäten des Befestigungssystems nicht verfügbar sind. Der Halterungsadapter und das Passagiergerät, dessen Betrieb in der kritischen Flugphase nicht oder nur eingeschränkt erlaubt ist, werden hierfür bspw. mit dem weiteren Gepäck des Passagiers verstaut. Daher führt das Befestigungssystem mit der Verbindungseinrichtung in der Parkstellung zu keiner Beeinträchtigung der Sicherheit des Passagiers, der sich in unmittelbarer Nähe der Haltevorrichtung befindet, so dass bei Beschleunigungen aus einem Crashfall z.B. bis 16 g die Verletzungsgefahr für den Passagier nicht erhöht wird. Weiterhin ermöglicht die Verschiebbarkeit der Verbindungsvorrichtung zwischen einer Nutz- und einer Parkstellung die Verstauung der Verbindungsvorrichtung, falls deren Nutzung durch den Passagier nicht gewünscht oder die Verbindungsvorrichtung der Haltevorrichtung beim Aufstehen eines Passagiers stören würde.

Vorzugsweise ist die Verbindungsvorrichtung in der Parkstellung in dem Flugzeugsitz versenkt. Das Versenken der Verbindungsvorrichtung in der Parkstellung in der Haltevorrichtung ermöglicht eine ebenmäßige, flache Oberfläche, die insbesondere bei einer Anordnung der Haltevorrichtung in der Rückenlehne eines Flugzeugsitzes, wobei die Haltevorrichtung jeweils für den dahinter sitzenden Passagier vorgesehen ist, vorteilhaft ist, um keine exponierten Stellen aufzuweisen. Das Verletzungspotential in einem Crashfall wird durch die ebenmäßige, flache Oberfläche in der Parkstellung minimiert. Übermäßige Punktlasten, Schnittwunden oder das Eindringen von Teilen der Haltevorrichtung in den Körper des Passagiers in einem Crashfall kann so verhindert werden. Die Verbindungsvorrichtung wird beim Versenken vorzugsweise senkrecht zu der zum Passagier gewandten Oberfläche der Haltevorrichtung in die Haltevorrichtung hineinbewegt. Im versenkten Zustand in der Parkstellung der Verbindungsvorrichtung ist es vorteilhaft, wenn Verbindungsvorrichtung und Haltevorrichtung eine im Wesentlichen ebene Fläche bilden.

Vorzugsweise ist der Halterungsadapter gegenüber der Haltevorrichtung, vorzugsweise um mindestens 90°, weiterhin vorzugsweise um 180°, drehbar und/oder um mindestens eine Achse, vorzugsweise um mindestens 5°, weiterhin vorzugsweise um 20°, kippbar, wenn die Verbindungsvorrichtung und die Verbindungseinrichtung in der Nutzstellung mechanisch miteinander verbunden sind. Zudem ist vorzugsweise mindestens eine Drehstellung des Halterungsadapters relativ zu der Haltevorrichtung arretierbar und/oder weist vorzugsweise in mindestens einer Drehstellung eine Raststellung auf.

Die Drehbarkeit des Halterungsadapters ermöglicht vorteilhaft verschiedene Ausrichtungen eines Bildschirms des Passagiergeräts, so dass für eine effektive Nutzung eine Ausrichtung des Bildschirmes quer oder hochkant erfolgen kann. Daher kann das befestigte Passagiergerät durch den Passagier in die entsprechende Ausrichtung gedreht werden. Weiterhin ist eine Kippbarkeit des Halterungsadapters gegenüber der Haltevorrichtung vorteilhaft, um eine angepasste Ausrichtung des Passagiergeräts zum Passagier, insbesondere zum Kopf des Passagiers, zu ermöglichen. Die Ausrichtung kann somit in Abhängigkeit der körperlichen Verhältnisse, Gewohnheiten und der Sitzposition des Passagiers erfolgen. Zudem ist eine variable Ausrichtung vorteilhaft, insbesondere wenn die Stellung der Rücklehne des Flugzeugsitzes, bspw. der Vordersitz, an dem der Halterungsadapter angeordnet ist, verstellt wird, so dass eine Anpassung durch den nutzenden Passagier möglich ist.

Weiterhin ist vorzugsweise eine zwischen der Verbindungsvorrichtung und der Verbindungseinrichtung wirkende lösbare Arretierungseinrichtung vorgesehen. Die Arretierungseinrichtung kann ein unbeabsichtigtes Lösen des Halterungsadapters von der Haltevorrichtung verhindern, wenn das Flugzeug durch Flugmanöver und/oder Turbulenzen Beschleunigungen in verschiedene Richtungen erfährt, die die mechanische Verbindung zwischen der Verbindungsvorrichtung und der Verbindungseinrichtung unbeabsichtigt lösen könnten. Dies kann Verletzungen des Passagiers und/oder Beschädigungen des Passagiergerätes verhindern. Weiterhin kann es ein unbeabsichtigtes Lösen bei einer Drehung des Halterungsadapters verhindern.

Eine solche Arretierungseinrichtung kann bspw. eine Kugellagerverriegelung, d.h. z.B. eine gefedert und/oder drehbar gelagerte Kugel, oder auch ein mechanischer Verschlussmechanismus, insbesondere mit einem gefederten Verschlussteil, sein. Ein Teil der Arretierungseinrichtung, z.B. die gefederte und/oder drehbare Kugel, kann in der Verbindungsvorrichtung angeordnet sein. Ein entsprechender Teil der Arretierungseinrichtung als Gegenstück kann, bspw. in Form einer Mulde, in der Verbindungseinrichtung des Halterungsadapters vorgesehen sein.

In einer möglichen vorteilhaften Ausführungsform ist die mechanische Verbindung zwischen Verbindungseinrichtung und Verbindungsvorrichtung ausschließlich durch ein Lösewerkzeug lösbar. Der Halterungsadapter kann beispielsweise durch die Fluggesellschaft gestellt werden, in diesem Fall ist es vorteilhaft, wenn der Passagier den Halterungsadapter nicht selbstständig ohne Lösewerkzeug von der Haltevorrichtung lösen kann. Das Kabinen- und/oder Servicepersonal kann daher mit einem Lösewerkzeug die mechanische Verbindung zwischen der Verbindungseinrichtung und der Verbindungsvorrichtung trennen und den Halterungsadapter wieder an sich nehmen.

Gleiches gilt für die Möglichkeit, wenn ein elektronisches Gerät der Fluggesellschaft direkt in den Halterungsadapter integriert und/oder mit diesem dauerhaft verbunden ist, und dieses Gerät dem Passagier zur Nutzung während des Fluges zur Verfügung gestellt wird. Dies ist insbesondere vorteilhaft, sofern das elektronische Gerät von der Fluggesellschaft dem Passagier zur Verfügung gestellt wird, wodurch ein schneller Austausch von Geräten und ein variabler Einsatz möglich werden.

In einer möglichen Ausführungsform kann unter den entsprechenden sicherheitstechnischen Voraussetzungen der Halterungsadapter mit einem elektronischen Gerät auch in kritischen Flugphasen an der Halterungsvorrichtung befestigt bleiben.

In einer alternativen vorteilhaften Ausführungsform ist die mechanische Verbindung zwischen der Verbindungseinrichtung und der Verbindungsvorrichtung elektronisch gesteuert lösbar. Hierdurch kann die mechanische Verbindung zwischen der Verbindungseinrichtung und der Verbindungsvorrichtung zentral gesteuert in der Kabine für mehrere Haltevorrichtungen gelöst oder auch freigegeben werden. Vorzugsweise kann eine gewünschte Stellung zentral gesteuert werden, so dass die Verbindungsvorrichtung in der Kabine in diese Stellung, z.B. die Parkstellung, bewegt werden kann, nicht jedoch wieder aus dieser heraus. Der aktuelle Verriegelungszustand kann in einer möglichen Ausführungsform elektronisch erfasst werden, so dass insbesondere das Servicepersonal zentral prüfen kann, ob sich alle Verbindungsvorrichtungen in der Parkstellung befinden. Weiterhin kann durch die elektronische Steuerung auf ein mechanisches Lösewerkzeug verzichtet werden. In einer möglichen Ausführungsform kann ein mechanisches Lösewerkzeug parallel genutzt werden.

Die Haltevorrichtung des Befestigungssystems weist erfindungsgemäß ein NFC-Lesegerät auf, vorzugsweise ein RFID-Lesegerät. Dieses Lesegerät ist direkt einer Haltevorrichtung zugeordnet und kann zur Steuerung von verschiedenen Funktionen und zum Erfassen von Informationen, insbesondere von Informationen, die auf die Haltevorrichtung bezogen sind, genutzt werden.

In einer bevorzugten Ausführungsform ist die mechanische Verbindung zwischen Verbindungseinrichtung und Verbindungsvorrichtung durch das Lesegerät elektronisch gesteuert öffenbar und/oder schließbar. Dies ermöglicht eine einfache und bequeme Weise, die mechanische Verbindung zwischen der Verbindungseinrichtung und der Verbindungsvorrichtung zu sichern oder für ein Lösen der Verbindung zu entsichern. Das Servicepersonal kann beispielsweise hierfür eine entsprechend codierte RFID-Karte verwenden.

Weiterhin wird die Aufgabe der Erfindung ausgehend vom Oberbegriff des Anspruchs 1 mit dessen kennzeichnenden Merkmalen gelöst. Es wird eine Haltevorrichtung für Passagiergeräte in einem Flugzeug vorgeschlagen, wobei die Haltevorrichtung erfindungsgemäß zur Anbringung an oder in einem Flugzeugsitz eingerichtet ist, wobei die Haltevorrichtung eine Verbindungsvorrichtung umfasst, wobei die Verbindungsvorrichtung zwischen einer Parkstellung und einer Nutzstellung verschiebbar ist. Die Verbindungsvorrichtung und eine Verbindungseinrichtung eines portablen Halterungsadapters, der dazu eingerichtet ist, mit dem Passagiergerät tragend verbunden zu werden, sind lösbar miteinander mechanisch tragend verbindbar. Erfindungsgemäß weist die Haltevorrichtung ein NFC-Lesegerät auf.

Vorzugsweise ist die Verbindungsvorrichtung zwischen einer Parkstellung und einer Nutzstellung verschiebbar. Die Verbindungsvorrichtung ist vorzugsweise in der Parkstellung versenkt. Weiter vorzugsweise ist die Verbindungsvorrichtung in der Parkstellung in der Haltevorrichtung versenkt.

In einer bevorzugten Ausführungsform weist die Verbindungsvorrichtung einen endseitigen Vorsprung auf. Dies ermöglicht eine vorteilhafte Anbringung eines Halterungsadapters. Zudem kann der endseitige Vorsprung durch den Passagier dazu genutzt werden, die Verbindungsvorrichtung aus der Parkstellung in eine Nutzstellung herauszuziehen. Der endseitige Vorsprung kann zusätzlich bei Nichtbenutzung einer Verbindungseinrichtung eines Halterungsadapters dazu genutzt werden, Taschen, Jacken oder andere Dinge an der Haltevorrichtung aufzuhängen.

In einer möglichen Ausführungsform ist die Haltevorrichtung an einer Armlehne des Flugzeugsitzes angeordnet. Dies kann vorteilhaft sein, um bei Sitzplätzen im Flugzeug ohne einen zugehörigen Vordersitz oder bei großen Sitzabständen, eine Befestigung von Passagiergeräten für diesen Sitzplatz zu ermöglichen. Aufgrund der seitlichen Anordnung kann ein mögliches Tablett gleichzeitig vorteilhaft nutzbar sein.

Vorteilhafterweise weist die Haltevorrichtung einen Haltearm auf, der an einem Ende mit dem Flugzeugsitz verbunden und an dessen anderem Ende die Verbindungsvorrichtung angebracht ist.

Der Haltearm ermöglicht eine vorteilhafte Positionierung des Haltearms im Sichtfeld des Passagiers, so dass diesem eine ergonomische Bedienung des Passagiergeräts ermöglicht wird. Der Haltearm ist in einer bevorzugten Ausführungsform klappbar, wodurch ein großer Positionierungsbereich und eine individuelle Positionierung durch den Passagier ermöglicht wird.

Vorzugsweise ist die Haltevorrichtung an einer Rückseite eines Flugzeugsitzes angeordnet. Die Haltevorrichtung kann in einer vorteilhaften Ausführungsform hierfür in der Rückenlehne eingelassen sein, so dass eine geschlossene Formgebung für die Rückenlehne möglich ist, was für die Sicherheit und den ästhetischen Eindruck vorteilhaft sein kann.

In einer möglichen vorteilhaften Ausführungsform ist die Verbindungsvorrichtung in einen Verschlussriegel eines Klapptisches integriert. Klapptische, die an der Rückseite eines Vordersitzes angeordnet sind, werden typischerweise in Flugzeugkabinen eingesetzt. Der Verschlussriegel befindet sich typischerweise am Sitz und oberhalb des Tischbretts im eingeklappten Zustand und entriegelt den Klapptisch durch eine Drehung um 90°. Der Verschlussriegel befindet sich dabei in vorteilhafter Höhe und Abstand zu dem Passagier, so dass eine Integration einer Verbindungsvorrichtung in den Verschlussriegel vorteilhaft ist. Ein Drehmechanismus des Verschlussriegels kann vorteilhaft für eine Drehung eines verbundenen Passagiergerätes genutzt werden.

Ein portabler Halterungsadapter für Passagiergeräte in einem Flugzeug weist vorzugsweise eine Verbindungseinrichtung auf, und der Halterungsadapter ist dazu eingerichtet, mit dem Passagiergerät tragend verbunden zu werden. Die Verbindungseinrichtung und eine Verbindungsvorrichtung einer Haltevorrichtung, die zur Verbindung an oder in einem Flugzeugsitz eingerichtet ist, sind lösbar miteinander mechanisch tragend verbindbar.

Vorzugsweise ist an dem Halterungsadapter ein Klebstoff angeordnet, wobei der Klebstoff mit einer Seite eines mobilen Passagiergeräts, oder bspw. an einer Schutzhülle dafür, verbindbar ist. Hierdurch kann ein sehr kleiner, leichter und kostengünstiger Halterungsadapter ermöglicht werden, der für eine Vielzahl von Passagiergeräten genutzt werden kann, sofern das Passagiergerät eine relativ flache und glatte Rückseite aufweist. Der Klebstoff kann beispielsweise als Abziehstreifen und/oder Klebstreifen an dem Halterungsadapter angeordnet sein. Ein solcher Halterungsadapter kann auch in einfacher Weise in der Kabine eines Flugzeugs vorgehalten werden und kann auf das Passagiergerät selbst oder auch auf eine Schutzhülle oder -schale eines Passagiergeräts geklebt werden.

An dem Halterungsadapter kann in einer Ausführungsform ein Verbindungsmittel zum Verbinden mit einer Gehäuseschale für ein mobiles Passagiergerät vorgesehen sein. Als Verbindungsmittel kann vorteilhaft eine Clipverbindung genutzt werden, wobei die Gehäuseschale eine entsprechende Anschlussstelle aufweist. In einer bevorzugten Ausführungsform weist die Gehäuseschale eine Mehrzahl von Positionierungsmöglichkeiten für das Verbindungsmittel durch verschiedene Anschlussstellen auf. Diese kann beispielsweise bei Tablet-PCs zur Positionierung und/oder Ausrichtung des Geräts im Verhältnis zur Haltevorrichtung genutzt werden.

In einer anderen Ausführungsform weist der Halterungsadapter eine Schale auf, wobei in der Schale ein mobiles Passagiergerät aufnehmbar ist. Das Passagiergerät kann mehrseitig umschlossen werden, wodurch sich hinsichtlich der Befestigung des Passagiergeräts in dem Halterungsadapter Vorteile ergeben. Das Passagiergerät bleibt im Halterungsadapter weiterhin bedienbar, und der Halterungsadapter kann gleichzeitig mechanischen Schutz für das Passagiergerät bieten.

Vorzugsweise umfasst der Halterungsadapter einen Aufrollbereich für mindestens ein Kabel. Der Aufrollbereich kann ein Kabel zum Anschluss des Passagiergeräts an einen Strom- und/oder Datenschluss aufnehmen, und dieses in möglichen Ausführungsformen federbelastet auf- und abrollen. Auf diese Weise ist ein entsprechendes Kabel am Passagiergerät lagerbar und kann effizient und platzsparend im Aufrollbereich verpackt bzw. gelagert werden. Ein Ende des Kabels kann einen in den Halterungsadapter integrierten Stecker aufweisen, so dass dieser Stecker vorbestimmt in das Passagiergerät eingesteckt sein kann, wenn das Passagiergerät tragend mit dem Halterungsadapter verbunden ist.

Die Erfindung wird im Folgenden anhand bevorzugter Ausführungsformen unter Bezugnahme auf die beigefügten Figuren erläutert. Dabei zeigt:
- Fig. 1: eine Haltevorrichtung mit einer Verbindungsvorrichtung;
- Fig. 2: eine Haltevorrichtung in einer Parkstellung;
- Fig. 3: eine Haltevorrichtung mit einer gekippten Verbindungsvorrichtung;
- Fig. 4: einen Halterungsadapter;
- Fig. 5: einen Halterungsadapter mit einem Aufrollbereich für ein Kabel;
- Fig. 6: einen kleinen Halterungsadapter;
- Fig. 7: Teile eines Befestigungssystems;
- Fig. 8: ein Befestigungssystem an der Rückseite eines Flugzeugsitzes;
- Fig. 9: eine Rückseite eines Flugzeugsitzes mit Haltevorrichtung;
- Fig. 10: eine Gehäuseschale und einen klippbaren Halterungsadapter;
- Fig. 11: verschiedene Anordnungen eines Tablet-PCs an einem Flugzeugsitz;
- Fig. 12: zwei Kippstellungen zwischen Haltevorrichtung und Halterungsadapter mit Passagiergerät;
- Fig. 13: eine Haltevorrichtung an einem Haltearm;
- Fig. 14: eine drehbare Haltevorrichtung an einem Haltearm;
- Fig. 15: ein Passagiergerät an einer Tasche am Flugzeugsitz;
- Fig. 16: eine Arretierungseinrichtung mit Lösewerkzeug;
- Fig. 17: eine Arretierungseinrichtung ohne Lösewerkzeug;
- Fig. 18: eine Arretierungseinrichtung mit Klippmechanismus;
- Fig. 19: einen Halterungsadapter für ein Passagiergerät an einem Verriegelungshebel; und
- Fig. 20: einen Halterungsadapter mit einem elastischen Ring.

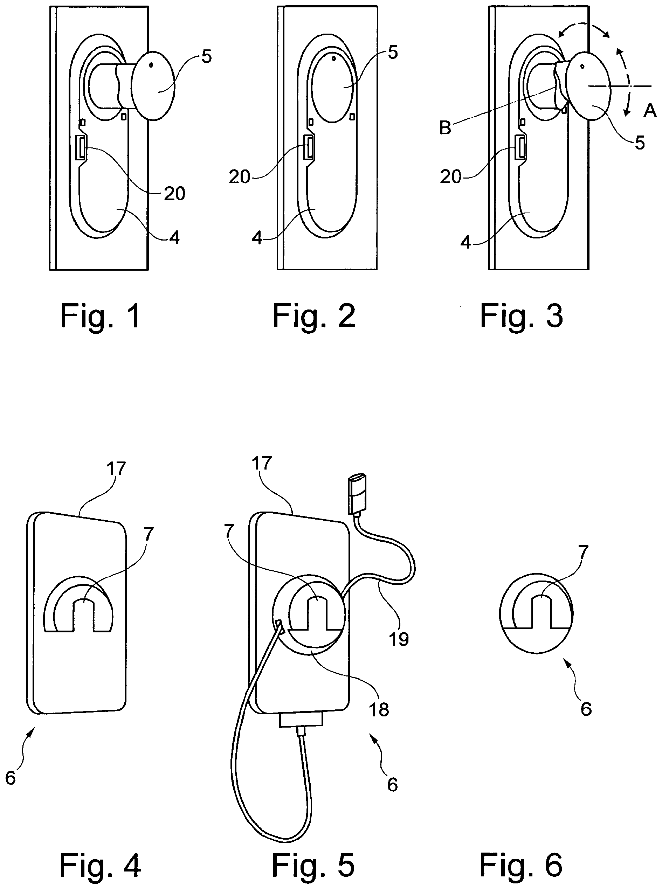

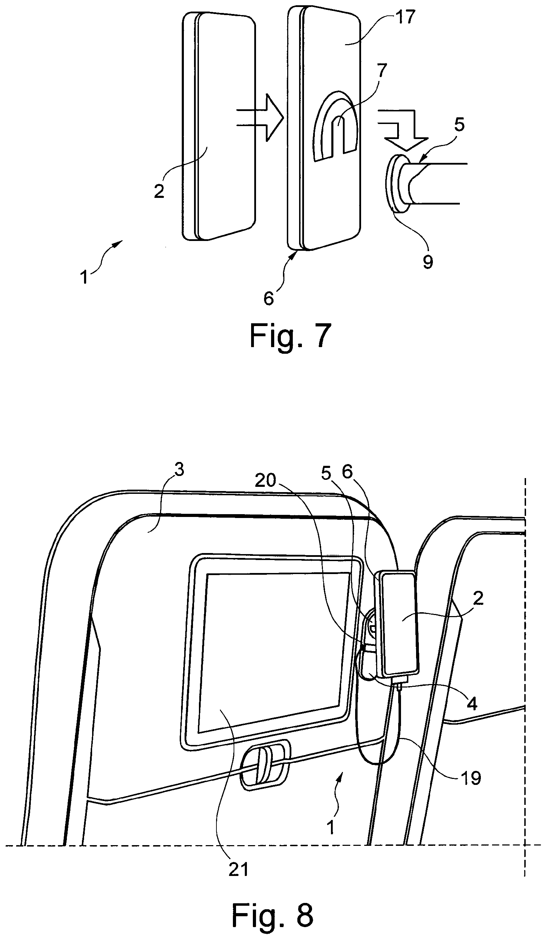

In Fig. 1 ist eine Haltevorrichtung 4 mit einer Verbindungsvorrichtung 5 eines Befestigungssystems 1 gezeigt. Die Haltevorrichtung 4 kann beispielsweise in einem Flugzeugsitz 3 angeordnet sein. Das Befestigungssystem 1 und der Flugzeugsitz 3 sind z.B. in Fig. 8 dargestellt. Die Verbindungsvorrichtung 5 befindet sich in Fig. 1 in einer Nutzstellung. Die Verbindungsvorrichtung 5 kann beispielsweise mittels Eindrücken durch den Passagier in eine Parkstellung in die Haltevorrichtung 4 bewegt werden, in der die Verbindungsvorrichtung 5 vorteilhafterweise verrastet.

Fig. 2 zeigt die gleiche Haltevorrichtung 4, jedoch ist in dieser Darstellung die Verbindungsvorrichtung 5 von der Nutzstellung aus Fig. 1 in eine Parkstellung bewegt worden. Die Verbindungsvorrichtung 5 ist somit in die Haltevorrichtung 4 bzw. in den Flugzeugsitz 3, an dem die Haltevorrichtung 4 vorzugsweise angeordnet ist, versenkt. Die Parkstellung kann in diesem Ausführungsbeispiel durch manuelles Eindrücken auf die Fläche der Verbindungsvorrichtung 5 gelöst werden, wodurch sich die Verbindungsvorrichtung 5 aus der Oberfläche der Haltevorrichtung 4 herausbewegt und/oder manuell herausbewegen lässt. In der Parkstellung ergibt sich bei einem möglichen Unfall eine einheitliche Fläche beim Aufprall eines Körpers, insbesondere des Kopfes, eines Passagiers, so dass sich Verletzungen durch übermäßige punktuelle Lasten vermeiden lassen.

In Fig. 3 ist in einer möglichen Ausführungsform in der Nutzstellung eine Beweglichkeit der Verbindungsvorrichtung 5 dargestellt, an der ein Halterungsadapter 6 mechanisch tragend verbunden werden kann, s. Fig. 4, 5 und 6. Die Verbindungsvorrichtung 5 erlaubt somit eine Rotation eines verbundenen Halterungsadapters 6. Die Rotation kann eine Drehung um eine Achse A um 90° oder um 180° sein. Weiterhin kann eine Verkippung des Halterungsadapters 6 durch eine Rotation um die Achse B erfolgen. Der Drehmechanismus ist im Ausführungsbeispiel der Fig. 3 in der Verbindungsvorrichtung 5 integriert.

Fig. 4 zeigt die Rückseite eines Halterungsadapters 6 mit einer Verbindungseinrichtung 7. Der Halterungsadapter 6 kann mit einem Passagiergerät 2 tragend verbunden werden, so dass eine Befestigung des Passagiergerätes 2 über den Halterungsadapter 6 möglich ist. Der Halterungsadapter 6 weist in diesem Ausführungsbeispiel eine Schale 17 auf, die das Passagiergerät 2, in dieser Darstellung nicht erkennbar, mehrseitig umschließt.

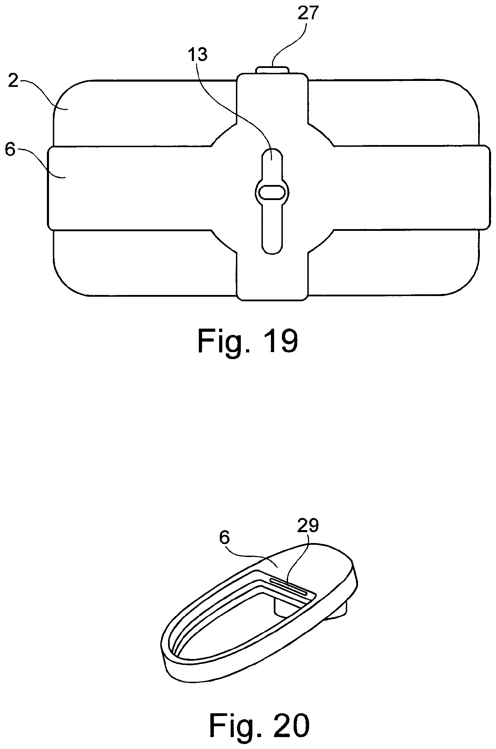

Die Haltevorrichtung 4 weist in vorteilhaften Ausführungsbeispielen eine Arretierungseinrichtung auf, wodurch die Verbindung zwischen der Verbindungsvorrichtung 5 und der Verbindungseinrichtung 7 gelöst werden kann. Das Lösen kann bspw. mit Hilfe eines Druckknopfes 27, s. Fig. 19, erfolgen.

Der Halterungsadapter 6 aus der Fig. 4 ist in der Darstellung der Fig. 5 um einen Aufrollbereich 18 ergänzt, mit dem ein Kabel 19, bspw. ein USB-Kabel, aufgerollt werden kann. Das Kabel 19 kann somit auf der einen Seite mit dem Passagiergerät 2 verbunden sein und auf der zweiten Seite an eine entsprechende Steckdose 20, z.B. an einer Haltevorrichtung 4, s. Fig. 1, 2 oder 3, eingesteckt werden, um für das Passagiergerät eine Strom- und/oder Datenverbindung zu ermöglichen. Alternativ kann die erste Seite des Kabels 19 einen Stecker aufweisen, der in den Halterungsadapter 6 integriert ist, so dass ein Stecker des Kabels 19 bei einer mechanischen Verbindung mit dem Halterungsadapter 6 in das Passagiergerät 2 eingesteckt ist.

Die Darstellung in Fig. 6 zeigt einen Halterungsadapter 6 mit einer Verbindungseinrichtung 7 zur mechanischen Verbindung oder auch Befestigung an der Verbindungsvorrichtung 5 der Haltevorrichtung 4. In diesem Ausführungsbeispiel kann der Halterungsadapter 6 deutlich kleiner ausgeführt werden als ein mögliches Passagiergerät 2. Die mechanisch tragende Verbindung zwischen dem Halterungsadapter 6 und einem hier nicht dargestellten Passagiergerät 2, z.B. Smartphone, kann mittels eines Klebstoffes erfolgen. Der Klebstoff kann zunächst als Klebestreifen auf der Rückseite des Halterungsadapters 6 angeordnet sein, und bei Bedarf nach dem Abziehen einer Trennfolie mit der Rückseite eines Passagiergerätes 2 verklebt werden.

Fig. 7 zeigt ein Ausführungsbeispiel eines Befestigungssystems 1 mit einem Passagiergerät 2, welches mit dem für ein bestimmtes Modell des Passagiergerätes 2 vorgesehenen Halterungsadapter 6 in der Ausprägung einer Schale 17 verbunden werden kann. Der Halterungsadapter 6 kann zusammen mit dem Passagiergerät 2 mittels der Verbindungseinrichtung 7 mit der Verbindungsvorrichtung 5 der Haltevorrichtung 4, hier nicht dargestellt, verbunden werden. Die Verbindung kann zunächst durch Einhängen der entsprechend geformten Verbindungseinrichtung 7 in die Verbindungsvorrichtung 5 erfolgen. Eine Arretierungseinrichtung gegen ein ungewolltes Lösen der mechanischen Verbindung kann zusätzlich vorgesehen sein, ist jedoch in diesem Ausführungsbeispiel nicht dargestellt. Weiterhin ist in Fig. 7 ein endseitiger Vorsprung 9 der Verbindungsvorrichtung 5 dargestellt. Dieser kann, wie in diesem Ausführungsbeispiel, umlaufend in der Form eines runden Plättchens sein.

Das Abnehmen des Passagiergerätes 2 zur handgeführten Benutzung oder Verstauung im Gepäck erfolgt vorzugsweise durch das Lösen der mechanischen Verbindung zwischen Verbindungsvorrichtung 5 und Verbindungseinrichtung 7, so dass die Verbindung zwischen dem Halterungsadapter 6 und dem Passagiergerät 2 vorzugsweise bestehen bleibt. Der Halterungsadapter 6 kann in dieser Zeit als Schutzhülle für das Passagiergerät 2 fungieren.

In Fig. 8 ist das aus Fig. 7 beschriebene Befestigungssystem 1 an der Rückenlehne eines Flugzeugsitzes 3 dargestellt. Das Passagiergerät 2 ist mit dem Halterungsadapter 6 verbunden, welcher wiederum mit der in der Nutzstellung befindlichen Verbindungsvorrichtung 5 mechanisch verbunden ist. Die Haltevorrichtung 4 ist in die Rückenlehne des Flugzeugsitzes 3 integriert. Der Halterungsadapter 6 ist zusammen mit dem Passagiergerät 2 leicht gekippt, so dass sich für den Passagier ein guter Betrachtungswinkel auf sein Passagiergerät 2 ergeben kann. Weiterhin stellt ein Kabel 19 eine Strom- und/oder Datenverbindung mit einer Steckdose 20 her, die in diesem Ausführungsbeispiel in der Haltevorrichtung 4 angeordnet ist. Neben dem Befestigungssystem 1 ist in Fig. 8 ein fest installierter Bildschirm 21 eines Bordunterhaltungssystems dargestellt.

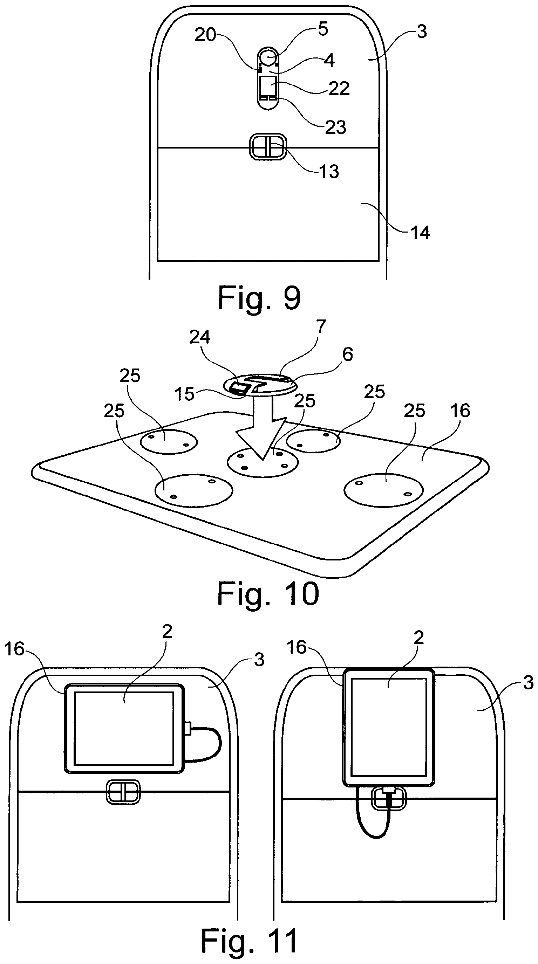

Fig. 9 zeigt die Rückenlehne eines Flugzeugsitzes 3 mit einer Haltevorrichtung 4, wobei keine Verbindung mit einem Passagiergerät 2 vorhanden ist, und die aus Fig. 2 bekannte Parkstellung der Verbindungsvorrichtung 5 eingestellt ist. Eine solche Parkstellung kann bspw. eingenommen werden, wenn sich das Flugzeug in einer kritischen Flugphase befindet, so dass bei einem möglichen Unfall keine zusätzliche Verletzungsgefahr durch die Haltevorrichtung 4 ausgeht. Weiterhin kann die Parkstellung genutzt werden, wenn der Passagier kein Passagiergerät 2 mitführt oder dieses zumindest zeitweise nicht nutzen möchte. Die Haltevorrichtung 4 aus dem Ausführungsbeispiel der Fig. 9 weist zusätzlich ein Display 22 und Bedienelemente 23 auf, die für verschiedene Eingaben des Passagiers an Bordsysteme oder zur Ausgabe von Informationen an den Passagier genutzt werden können.

Weiterhin kann die Haltevorrichtung 4 ein Lesegerät aufweisen, welches für eine drahtlose Kommunikation bzw. ein drahtloses Auslesen von RFID-Tags bzw. RFID-Transpondern und/oder von passiven und/oder aktiven Transpondern für eine Nahfeldkommunikation (NFC) eingerichtet sind.

In Fig. 10 ist ein Halterungsadapter 6 gezeigt, der ein Verbindungsmittel 15, in diesem Fall einen Clip, aufweist, welcher mittels eines Druckknopfes 24 gelöst werden kann. Der Halterungsadapter 6 kann an verschiedenen Anschlussstellen 25 einer Gehäuseschale 16, den unterschiedlichen möglichen Befestigungspositionen des Halterungsadapters 6 an der Gehäuseschale 16 entsprechend, befestigt bzw. festgeklippt werden. Die Gehäuseschale 16 dient zur Aufnahme und Befestigung eines Passagiergeräts 2, wobei das Passagiergerät in diesem Ausführungsbeispiel vorzugsweise ein Tablet-Computer ist. Die unterschiedlichen Anschlussstellen ermöglichen eine individuelle Positionierung des Passagiergeräts mit dem Befestigungssystem 1.

Die Gehäuseschale 16 und die Schale 17 eines Halterungsadapters 6 können vergleichbar geformt sein, jedoch wird mittels der Gehäuseschale 16 eine indirekte mechanische Verbindung zwischen einem Passagiergerät 2 und dem Halterungsadapter 6 hergestellt. Die Gehäuseschale kann daher ein Vermittlungsteil sein.

Fig. 11 zeigt zwei mögliche Anordnungen für ein Passagiergerät 2 in der Art eines Tablet-PCs, die mittels des Verbindungsmittels 15 an dem Halterungsadapter 6 und der Gehäuseschale 16 erreicht werden können.

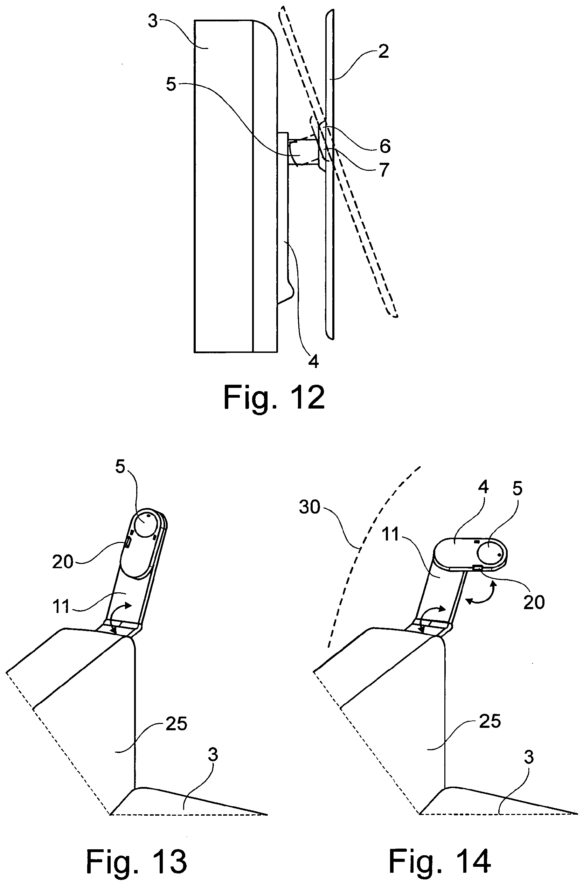

Fig. 12 zeigt zwei Kippstellungen zwischen einer Haltevorrichtung 4 und einem Halterungsadapter 6 mit Passagiergerät 2, wobei das Passagiergerät 2 in einer Kippstellung gestrichelt dargestellt ist. Die gekippte Stellung kann bspw. mit einem Kugelschnapper in mehreren Kippstellungen arretiert werden. Die arretierbaren Kippstellungen können bspw. wie in diesem vorteilhaften Ausführungsbeispiel bei 0° und/oder 20° vorgesehen sein. Hierbei kann es vorteilhaft sein, eine Anpassung an die Verstellbarkeit der Rückenlehne eines Flugzeugsitzes 3 vorzunehmen.

Ein alternativer Installationsort der Haltevorrichtung 4 ist in Fig. 13 gezeigt, wo die Haltevorrichtung 4 an einer Armlehne 25 eines Flugzeugsitzes 3 angeordnet ist. Dies ist vorteilhaft, wenn eine Installation der Haltevorrichtung an einer Rückenlehne eines Vordersitzes nicht möglich oder bspw. aufgrund des Abstands nicht sinnvoll ist.

Die Haltevorrichtung 4 ist in diesem Ausführungsbeispiel an einem Haltearm 11 angeordnet, der die Verbindung zum Flugzeugsitz 3 herstellt. Der Haltearm 11 ist vorteilhafterweise faltbar, so dass er in verschiedene Stellungen bewegt werden kann. Diese Stellungen können sich durch Nutzbarkeit und die Sicherheit bei einem Unfall unterscheiden. Der Haltearm 11 kann aus dem Flugzeugsitz 3 ausziehbar und/oder verlängerbar sein. In einem möglichen Ausführungsbeispiel kann der Haltearm 11 mindestens einen drehbaren Teil aufweisen. Zudem kann die Stellung bzw. Anordnung des Haltearms 11 bzw. der Haltevorrichtung 4 in vorteilhaften Ausführungsbeispielen so gewählt werden, dass bei einer Änderung der Rückenlehneneinstellung des Vordersitzes kein Kontakt zwischen Vordersitz und Haltearm 11, Haltevorrichtung 4, Halterungsadapter 6 und/oder Passagiergerät 2 entstehen kann.

Fig. 14 zeigt einen faltbaren Haltearm 11, wobei die Haltevorrichtung 4 in einer möglichen Ausführungsform seitlich, in diesem Ausführungsbeispiel um 90°, gedreht ist. Die Haltevorrichtung 4 kann in dieser gedrehten Stellung arretiert werden. Durch die Drehung der Haltevorrichtung 4, die in einem alternativen Ausführungsbeispiel auch durch den Faltarm 11 realisiert werden kann, kann eine Anordnung von größeren Passagiergeräten 2 an der Haltevorrichtung 4 ermöglicht werden. Dies ist insbesondere vorteilhaft, wenn es sich bei dem Flugzeugsitz 3 um einen Sitz an einer Wand 30, z.B. gekrümmte Kabinenwand, handelt.

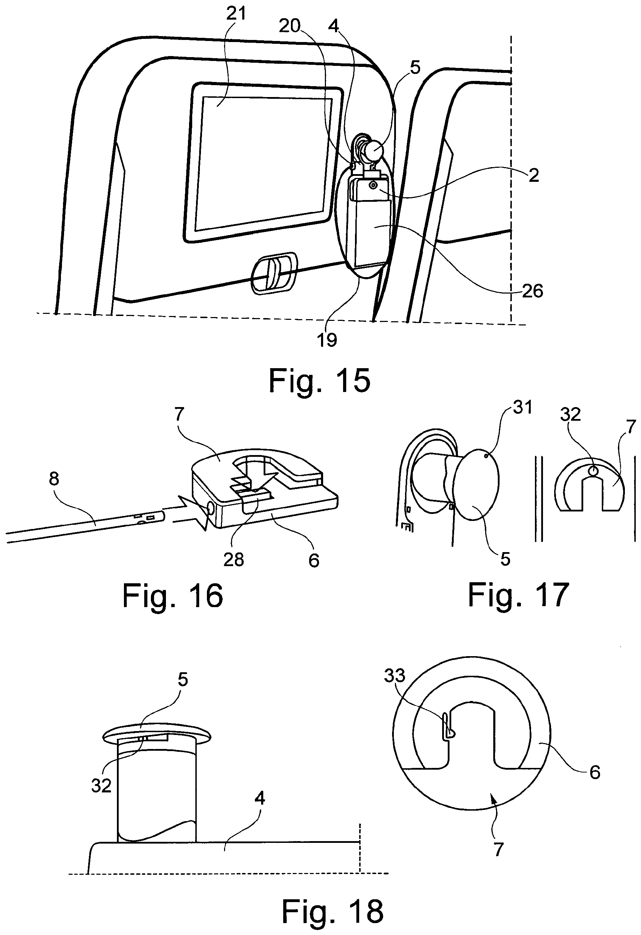

In Fig. 15 ist eine weitere Nutzungsmöglichkeit der Verbindungsvorrichtung 5 gezeigt, wobei ein Passagiergerät 2 mittels einer Tasche 26 mit einer entsprechenden Schlaufe gehalten wird. Das Passagiergerät 2 ist bei dieser Nutzungsmöglichkeit nur eingeschränkt durch die Tasche 26 für den Passagier nutzbar, kann jedoch bspw. mittels des Kabels 19 geladen werden und/oder zum Musikhören genutzt werden. Weiterhin kann es unabhängig von einem Tisch greifbar in der Nähe des Passagiers gelagert werden.

Fig. 16 zeigt eine an der Verbindungseinrichtung 7 angeordnete lösbare Arretierungseinrichtung, die eine lösbare mechanische Verbindung zwischen der Verbindungseinrichtung 7 und einer Verbindungsvorrichtung 5 ermöglicht. Die Arretierung kann bspw. mit einem verschiebbaren Blockadeelement 28 erreicht werden. Ein solches Blockadeelement 28 kann z.B. mittels eines Druckknopfes 27, s. Fig. 19, bewegt werden. Im Ausführungsbeispiel der Fig. 16 ist das Blockadeelement 28 der Arretierungseinrichtung nur mit einem Lösewerkzeug 8 lösbar, so dass vornehmlich nur das Servicepersonal der Fluggesellschaft, welches dieses Werkzeug zur Verfügung hat, die Verbindung zwischen der Verbindungseinrichtung 7 und der Verbindungsvorrichtung 5 lösen kann. Für den Passagier ist die Verbindung in diesem Ausführungsbeispiel typischerweise nicht lösbar.

In alternativen Ausführungsbeispielen kann die Arretierungseinrichtung elektronisch gesteuert gelöst werden, bspw. durch eine entsprechende servo-mechanische Ansteuerung. Ein entsprechendes Steuersignal kann zentral im Flugzeug über ein entsprechendes Datennetzwerk gegeben werden, oder über die Identifikation einer bestimmten RFID Kennung an der Haltevorrichtung 4 mittels des Lesegeräts. Auch in diesen Ausführungsbeispielen kann der Lösevorgang der mechanischen Verbindung vorzugsweise nur vom Servicepersonal mit einem entsprechenden Transponder gelöst werden, so dass bei einer möglichen Ausgabe von elektronischen Geräten in der Kabine durch die Fluggesellschaft diese Geräte nicht ungehindert von ihrem Installationsort entfernt werden können.

In einem weiteren möglichen Ausführungsbeispiel ist die Verbindungsvorrichtung 5 in der Haltevorrichtung 4 in der Parkstellung elektronisch verriegelbar, so dass eine zentral im Flugzeug gesteuerte Ver- und/oder Entriegelung erfolgen kann. Hierdurch kann eine Benutzung des Befestigungssystems 1 für die Passagiere bis zum Erreichen einer sicheren Flughöhe nach dem Start verhindert werden, wodurch eine Unterbindung der Nutzung in dieser kritischen Flugphase in einfacher Weise umzusetzen wäre. In einem weiteren möglichen Ausführungsbeispiel kann es eine Klarmeldung geben, wenn sich von allen im Flugzeug installierten Haltevorrichtungen 4 die Verbindungsvorrichtungen 5 in einer Parkstellung befinden.

In Fig. 17 ist ein weiteres Ausführungsbeispiel einer Arretierungseinrichtung dargestellt, wobei die Arretierungsvorrichtung an der Verbindungsvorrichtung 5 eine gefederte Kugel 31 und an der zugehörigen Verbindungseinrichtung 7 eines Halterungsadapters 6 eine entsprechende Mulde 32 aufweist. Im verbundenen Zustand greifen die Kugel 31 und die Mulde 32 formschlüssig ineinander, so dass sich die Verbindung zwischen Verbindungseinrichtung 7 und Verbindungsvorrichtung 5 nicht ungewollt, z.B. bei Turbulenzen während eines Fluges oder beim Drehen des Halterungsadapters 6, löst.

Eine solche Arretierungseinrichtung kann bspw. eine Kugellagerverriegelung, d.h. z.B. eine gefedert und/oder drehbar gelagerte Kugel, oder auch ein mechanischer Verschlussmechanismus, insbesondere mit einem gefederten Verschlussteil, sein. Ein Teil der Arretierungseinrichtung, z.B. die gefederte und/oder drehbare Kugel, kann in der Verbindungsvorrichtung angeordnet sein. Ein entsprechender Teil der Arretierungseinrichtung als Gegenstück kann, bspw. in Form einer Mulde, in der Verbindungseinrichtung des Halterungsadapters vorgesehen sein.

In Fig. 18 ist eine vorteilhafte Arretierungseinrichtung mit einem Klippmechanismus dargestellt, welche eine lösbare Verbindung zwischen der Verbindungsvorrichtung 5 und der Verbindungseinrichtung 7 bewirkt. Die Verbindungseinrichtung 7 des Halterungsadapters 6 weist hierbei eine Schnappnase 33 bzw. eine Federklemme oder auch Klipp auf. Die Verbindungsvorrichtung 5 weist in diesem Ausführungsbeispiel eine entsprechende Mulde 32 mit entsprechender Formgebung zum Einrasten auf. In einer alternativen Ausführungsform kann die Schnappnase 33 auch der Verbindungsvorrichtung 5 und die Mulde 32 der Verbindungseinrichtung 7 zugeordnet sein.

Fig. 19 zeigt einen Halterungsadapter 6 mit einem gehaltenen Passagiergerät 2. Der Halterungsadapter 6 und das Passagiergerät 2 sind in dieser Darstellung von einer rückseitigen Ansicht dargestellt. Der Halterungsadapter 6 in diesem Ausführungsbeispiel ist dafür vorgesehen, an einem Verriegelungshebel 13 eines Klapptisches 14 an der Rückseite eines Flugzeugsitzes 3 befestigt zu werden. Der Flugzeugsitz 3 ist in diesem Ausführungsbeispiel nicht dargestellt.

Weiterhin zeigt Fig. 20 einen Halterungsadapter, welcher einen elastischen Ring, bspw. aus Silikon, aufweist. Das Passagiergerät 2 kann in den elastischen Ring eingelegt werden, wobei eine Halterung des Passagiergeräts durch die federnde Eigenschaft des elastischen Rings möglich ist und/oder ein Zugmittel im elastischen Ring aufweist, wodurch das Passagiergerät im elastischen Ring festgeklemmt werden kann. Der Halterungsadapter 6 kann in einem möglichen Ausführungsbeispiel einen eingebauten Steckplatz 29 aufweisen, der dazu eingerichtet ist, bei einer Aufnahme eines Passagiergeräts 2 durch den Halterungsadapter 6 eine Steckverbindung zu einem Anschlussport eines Passagiersgeräts 2 herzustellen.

## Patentansprüche

1. Haltevorrichtung (4) für Passagiergeräte (2) in einem Flugzeug, wobei
- die Haltevorrichtung (4) zur Anbringung an oder in einem Flugzeugsitz (3) eingerichtet ist, wobei
- die Haltevorrichtung (4) eine Verbindungsvorrichtung (5) umfasst, wobei die Verbindungsvorrichtung (5) zwischen einer Parkstellung und einer Nutzstellung verschiebbar ist, und
- die Verbindungsvorrichtung (5) und eine Verbindungseinrichtung (7) eines portablen Halterungsadapters (6), der dazu eingerichtet ist, mit dem Passagiergerät (2) tragend verbunden zu werden, lösbar miteinander mechanisch tragend verbindbar sind, **dadurch gekennzeichnet, dass**
- die Haltevorrichtung (4) ein NFC-Lesegerät aufweist.

2. Haltevorrichtung (4) nach Anspruch 1, **dadurch gekennzeichnet, dass** die Verbindungsvorrichtung (5) in der Parkstellung versenkt ist und/oder einen endseitigen Vorsprung (9) aufweist und/oder in einen Verschlussriegel (13) eines Klapptisches (14) integrierbar ist.

3. Haltevorrichtung (4) nach einem der Ansprüche 1 oder 2, **dadurch gekennzeichnet, dass** die Haltevorrichtung (4) an einer Armlehne (10) angeordnet werden kann.

4. Haltevorrichtung (4) nach einem der vorangehenden Ansprüche, **dadurch gekennzeichnet, dass** die Haltevorrichtung (4) einen Haltearm (11) aufweist, der an einem Ende mit dem Flugzeugsitz (3) verbunden werden kann und an dessen anderem Ende die Haltevorrichtung (4) angebracht ist.

5. Haltevorrichtung (4) nach einem der vorangehenden Ansprüche, **dadurch gekennzeichnet, dass** die Haltevorrichtung (4) an einer Rückseite (12) eines Flugzeugsitzes (3) angeordnet werden kann.

6. Befestigungssystem (1) für Passagiergeräte (2) in einem Flugzeug, **dadurch gekennzeichnet, dass**
- das Befestigungssystem (1) eine an oder in einem Flugzeugsitz (3) anzubringende Haltevorrichtung (4) nach einem der vorangehenden Ansprüche aufweist,
- das Befestigungssystem (1) einen portablen Halterungsadapter (6) aufweist, wobei der Halterungsadapter (6) eine Verbindungseinrichtung (7) aufweist, und
- eine Verbindungsvorrichtung (5) der Haltevorrichtung (4) und die Verbindungseinrichtung (7) lösbar miteinander mechanisch tragend verbindbar sind, und
- der Halterungsadapter (6) dazu eingerichtet ist, mit dem Passagiergerät (2) tragend verbunden zu werden.

7. Befestigungssystem nach Anspruch 6, **dadurch gekennzeichnet, dass** die Verbindungsvorrichtung (5) in der Parkstellung in dem Flugzeugsitz (3) versenkbar ist.

8. Befestigungssystem (1) nach Anspruch 6 oder 7, **dadurch gekennzeichnet, dass** der Halterungsadapter (6) gegenüber der Haltevorrichtung (4) drehbar und/oder um mindestens eine Achse (A,B) kippbar ist, wenn die Verbindungsvorrichtung (5) und die Verbindungseinrichtung (7) in der Nutzstellung mechanisch miteinander verbunden sind.

9. Befestigungssystem (1) nach einem der Ansprüche 6 bis 8, **dadurch gekennzeichnet, dass** eine zwischen der Verbindungsvorrichtung (5) und der Verbindungseinrichtung (7) wirkende lösbare Arretierungseinrichtung vorgesehen ist.

10. Befestigungssystem (1) nach einem der Ansprüche 6 bis 9, **dadurch gekennzeichnet, dass** die mechanische Verbindung zwischen Verbindungseinrichtung (7) und Verbindungsvorrichtung (5) ausschließlich durch ein Lösewerkzeug (8) lösbar ist.

11. Befestigungssystem (1) nach einem der Ansprüche 6 bis 9, **dadurch gekennzeichnet, dass** die mechanische Verbindung zwischen Verbindungseinrichtung (7) und Verbindungsvorrichtung (5) elektronisch gesteuert lösbar ist.

12. Befestigungssystem (1) nach einem der Ansprüche 6 bis 11, **dadurch gekennzeichnet, dass** die Haltevorrichtung (4) ein RFID-Lesegerät aufweist.

13. Befestigungssystem (1) nach Anspruch 11 und 12, **dadurch gekennzeichnet, dass** die mechanische Verbindung zwischen Verbindungseinrichtung (7) und Verbindungsvorrichtung (5) durch das Lesegerät elektronisch gesteuert öffenbar und/oder schließbar ist.

14. Befestigungssystem (1) nach einem der Ansprüche 6 bis 13 oder Haltevorrichtung (4) nach einem der Ansprüche 1 bis 5, **dadurch gekennzeichnet, dass** an dem Halterungsadapter (6) ein Klebstoff angeordnet ist, wobei der Klebstoff mit einer Seite eines mobilen Passagiergeräts (2) verbindbar ist, und/oder ein Verbindungsmittel (15) zum Verbinden mit einer Gehäuseschale (16) für ein mobiles Passagiergerät (12) vorgesehen ist.

15. Befestigungssystem (1) nach einem der Ansprüche 6 bis 14 oder Haltevorrichtung (4) nach einem der Ansprüche 1 bis 5, **dadurch gekennzeichnet, dass** der Halterungsadapter (6) eine Schale (17) aufweist, wobei in der Schale (17) ein mobiles Passagiergerät (2) aufnehmbar ist, und/oder einen Aufrollbereich (18) für mindestens ein Kabel (19) umfasst.

## Claims

1. Holding apparatus (4) for passenger devices (2) in an airplane, wherein
- the holding apparatus (4) is equipped to be mounted on or in an airplane seat (3), wherein
- the holding apparatus (4) comprises a connecting apparatus (5), wherein the connecting apparatus (5) is displaceable between a park position and a use position, and
- the connecting apparatus (5) and a connecting device (7) of a portable carrier adapter (6) which is equipped to be connected to the passenger device (2) in a load-bearing manner can be connected releasably to one another in a mechanical load-bearing manner, **characterized in that**
- the holding apparatus (4) has an NFC reader.

2. Holding apparatus (4) according to claim 1, **characterized in that** the connecting apparatus (5) is recessed in the park position and/or has a protrusion (9) on one end and/or can be integrated into a locking latch (13) of a folding table (14).

3. Holding apparatus (4) according to any one of claims 1 or 2, **characterized in that** the holding apparatus (4) can be arranged on an armrest (10).

4. Holding apparatus (4) according to any one of the preceding claims, **characterized in that** the holding apparatus (4) has a holding arm (11) which can be connected at one end to the airplane seat (3), and on whose other end the holding apparatus (4) is mounted.

5. Holding apparatus (4) according to any one of the preceding claims, **characterized in that** the holding apparatus (4) can be arranged on a rear side (12) of an airplane seat (3).

6. Fastening system (1) for passenger devices (2) in an airplane, **characterized in that**
- the fastening system (1) has a holding apparatus (4) according to any one of the preceding claims to be mounted on or in an airplane seat (3),
- the fastening system (1) has a portable carrier adapter (6), wherein the carrier adapter (6) has a connecting device (7), and
- a connecting apparatus (5) of the holding apparatus (4) and the connecting device (7) are releasably connectable to one another in a mechanical load-bearing manner, and
- the carrier adapter (6) is equipped to be connected to the passenger device (2) in a load-bearing manner.

7. Fastening system according to claim 6, **characterized in that**, in the park position, the connecting apparatus (5) can be recessed in the airplane seat (3).

8. Fastening system (1) according to claim 6 or 7, **characterized in that** the carrier adapter (6) is rotatable with respect to the holding apparatus (4) and/or can be tilted about at least one axis (A, B) when the connecting apparatus (5) and the connecting device (7) are connected to one another mechanically in the use position.

9. Fastening system (1) according to any one of claims 6 to 8, **characterized in that** a releasable locking device which is acting between the connecting apparatus (5) and the connecting device (7) is provided.

10. Fastening system (1) according to any one of claims 6 to 9, **characterized in that** the mechanical connection between the connecting device (7) and the connecting apparatus (5) can be released exclusively by an extraction tool (8).

11. Fastening system (1) according to any one of claims 6 to 9, **characterized in that** the mechanical connection between the connecting device (7) and the connecting apparatus (5) can be released in an electronically controlled manner.

12. Fastening system (1) according to any one of claims 6 to 11, **characterized in that** the holding apparatus (4) has an RFID reader.

13. Fastening system (1) according to claims 11 and 12, **characterized in that** the mechanical connection between the connecting device (7) and the connecting apparatus (5) can be opened and/or closed in an electronically controlled manner by means of the reader.

14. Fastening system (1) according to any one of claims 6 to 13 or holding apparatus (4) according to any one of claims 1 to 5, **characterized in that** an adhesive is provided on the carrier adapter (6), wherein the adhesive can be connected to one side of a mobile passenger device (2) and/or a connecting element (15) for connection to a housing shell (16) for a mobile passenger device (12) is provided.

15. Fastening system (1) according to any one of claims 6 to 14 or holding apparatus (4) according to any one of claims 1 to 5, **characterized in that** the carrier adapter (6) has a shell (17), wherein a mobile passenger device (2) can be accommodated in the shell (17) and/or comprises a roll-up area (18) for at least one cable (19).

## Revendications

1. Dispositif de maintien (4) pour appareils de passager (2) dans un avion, dans lequel
- le dispositif de maintien (4) est agencé pour le montage sur ou dans un siège d'avion (3), dans lequel
- le dispositif de maintien (4) comprend un dispositif de liaison (5), le dispositif de liaison (5) pouvant être déplacé entre une position de rangement et une position d'utilisation, et
- le dispositif de liaison (5) et un moyen de liaison (7) d'un adaptateur de fixation (6) portable, qui est agencé pour être relié à l'appareil de passager (2) de manière portante, peuvent être reliés l'un à l'autre de manière détachable et mécaniquement portante, **caractérisé en ce que**
- le dispositif de maintien (4) comporte un lecteur NFC.

2. Dispositif de maintien (4) selon la revendication 1, **caractérisé en ce que**, dans la position de rangement, le dispositif de liaison (5) est escamoté et/ou comporte une saillie (9) côté extrémité et/ou peut être intégré dans une barre de verrou (13) d'une tablette rabattable (14).

3. Dispositif de maintien (4) selon l'une des revendications 1 ou 2, **caractérisé en ce que** le dispositif de maintien (4) peut être disposé sur un accoudoir (10).

4. Dispositif de maintien (4) selon l'une des revendications précédentes, **caractérisé en ce que** le dispositif de maintien (4) comporte un bras de maintien (11), qui peut être relié par une extrémité au siège d'avion (3) et le dispositif de maintien (4) étant monté sur son autre extrémité.

5. Dispositif de maintien (4) selon l'une des revendications précédentes, **caractérisé en ce que** le dispositif de maintien (4) peut être disposé au dos (12) d'un siège d'avion (3).

6. Système de fixation (1) pour appareils de passager (2) dans un avion, **caractérisé en ce que**
- le système de fixation (1) comporte un dispositif de maintien (4) selon l'une des revendications précédentes, à monter sur ou dans un siège d'avion (3),
- le système de fixation (1) comporte un adaptateur de fixation (6) portable, l'adaptateur de fixation (6) comportant un moyen de liaison (7), et
- un dispositif de liaison (5) du dispositif de maintien (4) et le moyen de liaison (7) peuvent être reliés l'un à l'autre de manière détachable et mécaniquement portante, et
- l'adaptateur de fixation (6) est configuré pour être relié à l'appareil de passager (2) de manière portante.

7. Système de fixation selon la revendication 6, **caractérisé en ce que**, dans la position de rangement, le dispositif de liaison (5) peut être escamoté dans le siège d'avion (3).

8. Système de fixation (1) selon la revendication 6 ou 7, **caractérisé en ce que** l'adaptateur de fixation (6) peut tourner par rapport au dispositif de maintien (4) et/ou basculer autour d'au moins un axe (A, B), quand le dispositif de liaison (5) et le moyen de liaison (7) sont reliés mécaniquement l'un à l'autre dans la position d'utilisation.

9. Système de fixation (1) selon l'une des revendications 6 à 8, **caractérisé en ce qu'**un moyen d'arrêt libérable agissant entre le dispositif de liaison (5) et le moyen de liaison (7) est prévu.

10. Système de fixation (1) selon l'une des revendications 6 à 9, **caractérisé en ce que** la liaison mécanique entre le moyen de liaison (7) et le dispositif de liaison (5) peut être libérée uniquement par un outil de libération (8).

11. Système de fixation (1) selon l'une des revendications 6 à 9, **caractérisé en ce que** la liaison mécanique entre le moyen de liaison (7) et le dispositif de liaison (5) peut être libérée par commande électronique.

12. Système de fixation (1) selon l'une des revendications 6 à 11, **caractérisé en ce que** le dispositif de maintien (4) comporte un lecteur RFID.

13. Système de fixation (1) selon les revendications 11 et 12, **caractérisé en ce que** la liaison mécanique entre le moyen de liaison (7) et le dispositif de liaison (5) peut être ouverte et/ou fermée par commande électronique au moyen du lecteur.

14. Système de fixation (1) selon l'une des revendications 6 à 13 ou dispositif de maintien (4) selon l'une des revendications 1 à 5, **caractérisés en ce qu'**une matière adhésive est placée sur l'adaptateur de fixation (6), la matière adhésive pouvant être reliée à une face d'un appareil mobile de passager (2), et/ou un organe de liaison (15) est prévu pour la liaison avec une coque de boîtier (16) pour un appareil mobile de passager (12).

15. Système de fixation (1) selon l'une des revendications 6 à 14 ou dispositif de maintien (4) selon l'une des revendications 1 à 5, **caractérisés en ce que** l'adaptateur de fixation (6) comporte une coque (17), un appareil mobile de passager (2) pouvant être reçu dans la coque (17), et/ou comprend une zone d'enroulement (18) pour au moins un câble (19).
